(19) Europäisches Patentamt

European Patent Office

Office européen des brevets

(11) Publication number: **0 372 669 B1**

# (12) EUROPEAN PATENT SPECIFICATION

(45) Date of publication of patent specification: **27.10.93** (51) Int. Cl.5: **C11B 5/00, C11B 15/00**

(21) Application number: **89300424.2**

(22) Date of filing: **18.01.89**

The file contains technical information submitted after the application was filed and not included in this specification

(54) **Stabilized oil and fat powder.**

(30) Priority: **07.12.88 JP 309715/88**

(43) Date of publication of application:
**13.06.90 Bulletin 90/24**

(45) Publication of the grant of the patent:
**27.10.93 Bulletin 93/43**

(84) Designated Contracting States:
**BE CH DE ES FR GB IT LI NL SE**

(56) References cited:
FR-A- 2 117 506
US-A- 3 786 123

**JOURNAL OF AGRICULTURAL AND FOOD CHEMISTRY, vol. 36, no. 1, 1988, pages 160-164, American Chemical Society; K. IWAMI et al.: "Stability of gliadin-encapsulated unsaturated fatty acids against autoxidation"**

**PATENT ABSTRACTS OF JAPAN, vol. 10, no. 161 (C-352)[2217], 10th June 1986; & JP-A-61 15 733 (MIYOSHI YUSHI K.K.) 23-01-1986**

**JOURNAL OF AGRICULTURAL AND FOOD CHEMISTRY, vol. 35, no. 4, 1987, pages**

**628-631, American Chemical Society; K. IWAMI et al.: "Prominent antioxidant effect of wheat gliadin on linoleate peroxidation in powder model systems at high water activity"**

(73) Proprietor: **Asama Chemical Co., Ltd.**
**20-3 Nihonbashi-kodenmacho**
**Chuo-ku**
**Tokyo(JP)**

(72) Inventor: **Yajima, Mizuo**
**208, 9-16, Shirakawa 4-chome**
**Koto-ku Tokyo(JP)**

(74) Representative: **Taylor, Phillip Kenneth et al**
**W.P. THOMPSON & CO.**
**Coopers Building**
**Church Street**
**Liverpool L1 3AB (GB)**

EP 0 372 669 B1

**Description**

This invention relates to stabilized oil or fat powders and processes for preparing the same.

In recent years, it has been known that oils or fats containing unsaturated fatty acids have a physiological action, and these oils or fats have been widely used for addition to foods and livestock feeds. For ease in handling such oils and fats have been added to foods or feeds in powder form. Conventionally, for the powdering of oils or fats, there is adopted a method in which oils or fats are emulsified by the use of casein, dexrin or an emulsifier, followed by spray drying of the emulsion. However, oils or fats containing higher unsaturated fatty acids are generally liable to degrade or polymerize by the influence of heat, light, oxygen and the like. For instance, when refined fish oil containing large amounts of higher unsaturated fatty acids is powdered by the above known method, because of the increase in the surface area caused by the powdering, the powder deteriorates at a rate faster by several hundred times than that of the unpowdered oil. Thus, the production of a stable powdered oil is rendered very difficulty to achieve.

Hitherto in order to obtain a stable oil or fat powder, the oils or fats have been encapsulated in microcapsules in the form of a powder (microcapsule method) or a method wherein oils or fats are included with cyclodextrin and powdered (cyclodextrin method). However, the preparative steps of the microcapsule method are complicated in and the method results in poor productivity and high production costs. Furthermore, during storage, the capsules may be broken and the types of capsule which is suitable for use in foods or feeds is limited. In the cyclodextrin method, the ratio of materials to be included (oils or fats) to cyclodextrin is so small that the resultant product has only a small content of oils or fats. In addition, the cyclodextrin method suffers from the further disadvantages that the solubility in water is small and that the included oils or fats are released from the cyclodextrin ring by application of heat or by addition to a hydrous material. Moreover, it is substantially impossible to completely encapsulate an oil or fat in microcapsules or to permit an oil or fat to be included with cyclodextrin. The oil or fat not encapsulated in the microcapsules or not included with the cyclodextrin considerably lowers the stability of the powder.

FR-A- 2117506 describes the treatment of food substances bringing the food substance into intimate contact with a prolamine and an amino acid in a vehicle and drying the resultant mixture. The prolamine and amino acid together form an elastic mass. The vehicle may be water, an aqueous alcohol or a dilute acid. The prolamine may be gliadin.

US-A- 3786123 describes the admixing of an encapsulating agent and a nutrient followed by gelatinizing or polymerizing of the encapsulating agent under high temperature and pressure to encapsulate the nutrient. The encapsulating agent may be a high protein vegetable composition such as wheat flour gluten. The product is preferably formed in an extruder operating at about 350°C and about 1000 psi pressure.

Patent Abstracts of Japan Vol. 10, No. 161 (C-352) 22173 and JP-A- 6115733 describes edible oils and fats, which were coated with gelatin-gum arabic, are coated with a film consisting of a heat-coagulable protein and non-heat-coagulable protein or heat-coagulable protein, non-heat-coagulable protein and polysaccharides. Subsequently the coated oils and fats are heated to temperatures equal to or more than the coagulation point of the used heat-coagulable protein to prepare a microcapsule. As heat-coagulable protein, there are egg white albumin, milk albumin or globin and, as non-heat-coagulable protein, there are gluten, gliadin or casein. As polysaccharides, there are guar gum, locust beam gum or carageenin.

In Journal of Agricultural and Food Chemistry, Vol. 35, No. 4, 1987 pages 628-631, K. Iwami et al examined various proteins for their antioxidant effects in powder model systems. Wheat gliadin that was prepared from gluten by extraction with 70% ethanol, but not gluten and its component "glutenia" was the most effective in antioxidation against linoleate peroxidation under the experimental conditions (40°C, $A_w$ = 0.6).

In a later paper, Journal of Agricultural and Food Chemistry, Vol 36, No. 1, 1988, pages 160-164 the same authors K. Iwanami et al compared the antioxidant effects at various $A_w$ of spray-dried powders prepared from alcoholic solutions of gliadin, linoleic acid and palmitic acid against powders prepared by simple mixing of these components in the same portions and against gelatin or starch powders substituted for gliadin. The effectiveness of gliadin at low or moderate $A_w$ that was not as good as at high $A_w$ was greatly improved via the process of spray drying. The process caused a significant loss in the extraction efficiency of fatty acids by hexane but did not influence the in vitro digestion of gliadin.

It has now surprisingly been found that when gluten or glutenin and oils or fats are added to a solvent and agitated, and the solvent then removed from the mixture and the resultant residue subjected to powdering, a stable oil or fat powder can be obtained while suppressing the decomposition and polymerization of the oils or fats.

The invention provides a process for preparing a stabilized oil or fat powder characterised by comprising adding an oil or fat to a mixture of gluten or glutanin and a solvent and agitating the mixture, removing the solvent, and subjecting the resultant residue to powdering. Preferably the solvent is a hydrous alcohol having an alcohol content of 20-80% by volume.

It is preferable that the powder comprises for each 100 parts by weight of gluten or glutenin from 1 to 51 parts by weight of oil and/or fat. In the present invention, the oil and/or fat may be clathrated and/or coated with both gliadin and glutenin or with glutenin alone.

In a particular embodiment the invention provides a process for preparing a stabilized oil and/or fat powder, which comprises the steps of first adding gluten to a solvent to dissolve gliadin contained in the gluten into the solvent, the solid remaining is separated from the gliadin-containing solvent the separated solid which contains glutenin is used as the glutenin in the process of the present invention.

The stabilized oil or fat powder prepared by the method of the invention comprises at least glutenin and oils and/or fats. The glutenin or glutenin and gliadin when gluten is used are considered to bind oils or fats in a hydrophobic region of the molecule so as to prevent contact of the oils or fats with oxygen, thereby inhibiting degradation of the oils or fats. The oils or fats may be included or covered with glutenin or glutenin and gliadin, or may be ones which are a mixture of included and covered oils and/or fats. When covered, oils or fats may be partially or wholly covered. Alternatively, oil or fat particles may be covered with a uniform film or covered on at least part of the surfaces with particles of glutenin or glutenin and gliadin.

The ratio of gluten or glutenin to the oil and/or fat in the oil and/or fat powder of the invention is preferably 1 to 51 parts by weight of the oil and/or fat per 100 parts by weight of gluten or glutenin.

The gliadin is a mixed protein mainly composed of glutamic acid and proline. A high molecular weight gliadin has a molecular weight of 100,000 to 12,500. When the SS bonds are cut, it is separated into polypeptides having a molecular weight of 44,000 to 36,000. On the other hand, glutenin is also a protein contained in gluten and has SS bonds between and in chains and is considered as an agglomerate of gigantic molecules having a molecular weight of several millions. In the practice of the invention, gluten containing gliadin and glutenin can be used as it is. Gluten contains about 40% of each of gliadin and glutenin, about 20% of starch and others. When water is added to gluten, a very high viscoelasticity is shown, by which gluten is utilized as a thickener, binder or a water retaining agent for addition to foods. It is generally accepted that the viscosity results from gliadin and the elasticity results from glutenin.

The oil or fat powder produced by the method of the invention is obtained by a method wherein gluten and oils or fats are added to a solvent and agitated for dissolution or dispersion, after which the solvent is removed and the resultant residue is subjected to powdering, or by a method wherein glutenin and oils or fats are added to a solvent and agitated, after which the solvent is removed and the resultant residue is subjected to powdering.

Gluten is soluble in diluted acetic acid, ammonia, a mixture solution of acetic acid and ethanol, and gliadin is soluble in a hydrous alcohol, diluted acids, diluted alkaline solutions and the like. In this connection, however, when gliadin in gluten is allowed to dissolve in a solvent, a hydrous alcohol is favourably used because such an alcohol can suppress swelling of glutenin with water and an increase of viscosity, thus leading to a high working efficiency. On the other hand, where glutenin is used, gliadin is first extracted from gluten with a solvent incapable of dissolving glutenin such as, for example, a hydrous alcohol, after which insoluble matters in the hydrous alcohol (mainly composed of glutenin along with starch) are separated and used. Glutenin is insoluble in a hydrous alcohol, but the hydrous alcohol may be used as a solvent. In this case, glutenin is used by dispersion in the hydrous alcohol.

The gluten may be wet gluten separated from wheat flour or may be activated gluten which has been obtained after drying. In view of workability, the activated gluten in the form of a dried powder is preferred.

The hydrous alcohol may be one which has a content of alcohol of 20 to 80% by volume, preferably from 65 to 75% by volume. The ratio of the hydrous alcohol and gluten is in the range of from 3 to 6 parts by weight, preferably from 4 to 5 parts by weight, of the hydrous alcohol per part by weight of gluten. The alcohol should preferably be monovalent alcohols such as methyl alcohol, ethyl alcohol, isopropyl alcohol and the like. When gluten is added to the hydrous alcohol and agitated, gliadin is extracted from gluten in the hydrous alcohol. The agitation is preferably effected by means of a high speed agitator for a time of not shorter than 30 minutes, by which substantially all gliadin in the gluten can be extracted in the hydrous alcohol.

After addition of oils or fats to a solvent dissolving or dispersing gluten or gliadin or to a solvent to which glutenin is added, the mixture is agitated. This agitation is effected for a time of from 10 to 30 minutes or longer, Preferably from 15 to 45 minutes by the use of an agitator such as, for example, a high speed homomixer. The amount of the oils or fats is preferably from 0.05 to 4 parts by weight per part by weight of gluten and from 0.1 to 4 parts by weight per part by weight of glutenin.

The oils or fats used in the practice of the invention may be various oils or fats such as animal oils or fats and plant oils or fats. Preferably, refined fish oils containing large amounts of higher unsaturated fatty acids, and oils or fats containing larger amounts of $\alpha$-linoleic acid or $\gamma$-linoleic acid are used. These oils or fats are unstable against oxygen, on which the present invention shows a satisfactory effect.

In the practice of the invention, antioxidants may be added to the solvent or oils or fats, if necessary. Moreover, synergists such as citric acid, EDTA and the like or other additives such as lecithin may be added, if necessary. The use of an antioxidant and a synergist in combination can further improve a resistance to oxidation. If necessary, an emulsifier such as lecithin, glycerine fatty acid esters, sorbitan fatty acid esters, sugar fatty acid esters may be added to the solvent. The use of these emulsifiers can improve a mixing efficiency by agitation, by which an efficiency of contact between oils or fats and gliadin and/or glutenin is improved with a stabilized oil or fat powder being prepared efficiently.

In accordance with the method of the invention, after addition of an oil or fat to a solvent and agitation, the solvent is removed and the residue is subjected to powdering. The powdering may be effected by spray drying, drying in vacuum, freeze-drying, drying in drum or other known drying methods.

When a diluted acid (e.g. an organic acid such as acetic acid, citric acid, malic acid or the like or a mineral acid such as hydrochloric acid, sulfuric acid, phosphoric acid or the like) is used as a solvent, the pH should preferably be adjusted to 3 to 4. On the contrary, when a diluted alkaline solution (such as ammonia, sodium carbonate, sodium hydrogencarbonate, phosphates or the like) is used, the pH should preferably adjusted to 9 to 11. Subsequently, oils or fats are added.

The oil or fat powder obtained according to the method of the invention is stable when allowed to stand in air or added to hydrous foods, and is unlikely to decompose or change in quality by polymerization by means of oxygen, light or heat. In addition, the powder is advantageous in that when it is added to foods or feeds, the powder has the functions of thickening and binding foods and retaining water in the foods.

As will become apparent from the above, the oil or fat powder of the invention is very stable against oxygen, heat and light. Even when oils or fats containing higher unsaturated fatty acids which are very unstable and deteriorate within a short time when powdered are used for powdering, there is little possibility of changing the quality by decomposition or polymerization of the oils or fats. In addition, the content of oils or fats in the powder is very high, and thus the powder high high utility with high stability. When the oil or fat powder of the invention is added to foods, it exhibits not only the properties inherent to the oil or fat, but also other functions of imparting thickening, binding and water retention properties to the foods. According to the method of the invention, the oil or fat powder of the good properties can be reliably prepared. Gluten is provided relatively inexpensively and gliadin or glutenin is readily available by separation from gluten, so that a highly stabilized oil or fat powder can be obtained inexpensively.

[ Brief Description of Drawing ]

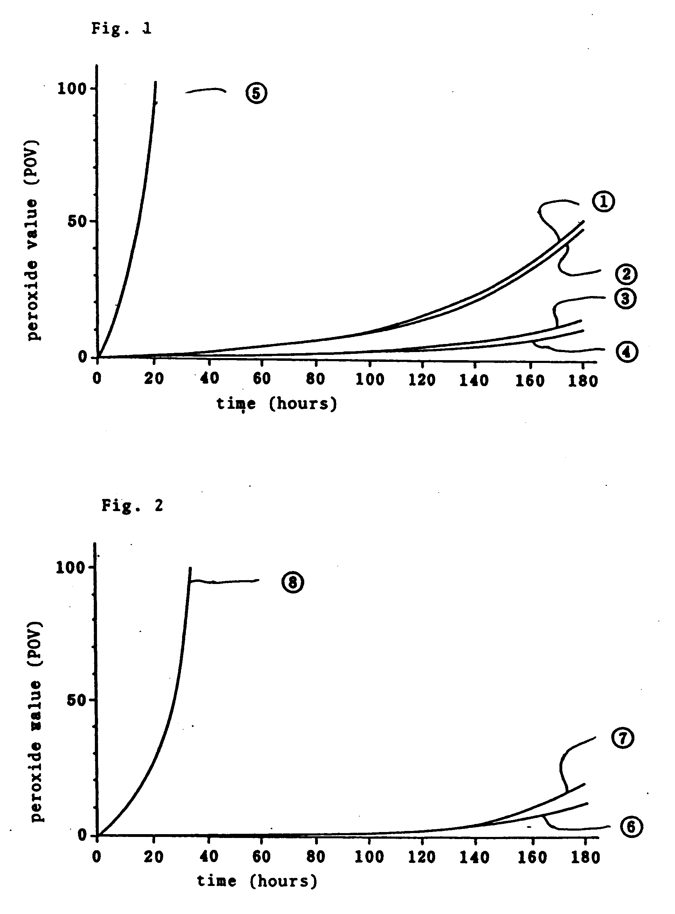

Fig. 1 is a graph showing the thermal stability of oil powders of Example 1 and Comparative Example 1; and Fig. 2 is a graph showing the thermal stability of oil powders of Example 2 and Comparative Example 2.

[Examples]

The present invention is described in more detail by way of examples.

Example 1, Comparative Examples 1 and 1A

1 kg of activated gluten powder was added to 5 liters of hydrous ethanol having a content of the alcohol of 70 vol%, followed by agitation for 30 minutes by the use of an agitator. Subsequently, 50 g of a refined, deodored fish oil (18% of eicosapentaenoic acid and 13% of docosahexaenoic acid with a peroxide value of 0.1) was added to 1 liter of the hydrous ethanol and agitated for 15 minutes, followed by removal of the hydrous ethanol by means of a vacuum dryer and division of the dried matter into fine pieces to obtain a powder (oil powder (1)).

On the other hand, the balance of the hydrous alcohol which had been agitated for 30 minutes after addition of the activated gluten was centrifugally separated for 20 minutes at 3000 r.p.m. to remove the resultant precipitate (glutenin, starch and the like). Thereafter, the solution dissolving the gliadin was concentrated to such an extent that the concentration of the gliadin in the hydrous alcohol was 20% (weight/volume percent), after which 45 g of such refined deodored fish oil as used above was added to 1 liter of the a hydrous alcohol and agitated for 15 minutes by means of a homomixer, followed by drying by

4

the use of a vacuum dryer and powdering to obtain a powder (oil powder (2) comparative Example 1).

In the same manner as the method of preparing the oil powder (1) using such an oil as used above but adding 0.1 wt% of BHA as an antioxidant and 0.3 wt% of a rosemary extract (Moluccas 10P, available from Asama Kasei K.K.), which is a natural antioxidant, there were obtained oil powders (3) and (4), respectively.

These oil powders (1) to (4) and oil powder (5) which was obtained by subjecting an emulsion obtained by emulsifying a refined deodored fish oil as used above by the use of dextrin, sodium caseinate and an emulsifier, followed by dehydration and powdering (comparative Example 1A) were each heated in an oven at 50°C in an open system to check a degree of deterioration of the oil with time as a timewise variation in increase of a peroxide value of the oil. The results are shown in Fig. 1. The results revealed that the oil powders obtained according to the method of the invention are very small in the increase of the peroxide value when heated over a long term as compared with the conventional oil powder obtained by mere emulsification and powdering and are thus significantly more stable than the known oil powder and were equal to or when used with antioxidants better than gliadin aqueous alcohol.

Example 2, Comparative Example 2 and 2A

50 g of a refined beefsteak plant oil (containing 60% of $\alpha$-linoleic acid with a peroxide value of 0.1) was added to 1 litre of each of gliadin-containing hydrous ethanol which was obtained by removing the hydrous ethanol-insoluble matters in the same manner as in Comparative Example 1 and having a gliadin concentration of 20% (w/v percent) and a dispersion of hydrous ethanol-insoluble matters (mainly composed of glutenin along with starch and hereinafter referred to simply as crude glutenin) added to hydrous ethanol at a concentration of 20 wt%. Subsequently, the respective mixtures were agitated under the same conditions as in Example 1, from which the solvent was removed by means of a spray dryer to obtain powders (oil powder (6) obtained by the use of the gliadin (Comparative Example 2) and oil powder (7) obtained by the use of the crude glutenin).

The oil powders (6) and (7), and oil powder (8) which was obtained by spray drying an emulsion, with dextrin, sodium caseinate and an emulsifier, of a refined beefsteak plant as used for the oil powders (6) and (7) (Comparative Example 2A) were each subjected to a deterioration-with-time test of the oil under the same conditions as in Example 1. The results are shown in Fig. 2. From the results, it was confirmed that the oil powder obtained according to the method of the invention was more stable than the known oil powder obtained by powdering after the mere emulsification and equivalent to gliadin in aqueous alcohol.

Example 3 and Comparative Example 3

1 kg of wheat flour having a higher protein content than normal, 10 g of salt, 12 g of soda powder ($Na_2CO_3$ and $NaPO_4$) and 320 ml of water were added to 10 g of each of the two oil powders (1) and (5) obtained in Example 1 and used to make raw noodles by a usual manner. The above procedure was repeated without use of any powdery oil to obtain raw noodles. The three raw noodles were each boiled for 3 minutes, after which the boiled noodles were placed in a soup and allowed to stand. The feelings (pastiness, the presence or absence of firmness) upon eating of the noodles were checked with time. The results are shown in Table 1. It was confirmed that the noodles to which the oil powders of the invention were added were suppressed from pastiness over the noodles added with the known oil powder.

The noodle-making properties were judged by comparison with those for noodles to which no oil powder was added. The degree of firmness of the noodles were determined by comparison with a standard degree of firmness 2 minutes after boiling.

## Table 1

| | Noodles Using Oil Powder (1) | Noodles Using Oil Powder (5) | Noodles Using Using No Oil Powder |
|---|---|---|---|
| **Noodle-making Properties:** | | | |
| | good | fair | moderate |
| **Feelings After Boiling:** | | | |
| after 2 min. | firm | moderate | moderate |
| after 5 min. | firm | starting to become pasty | starting to slightly become pasty |
| after 7 min. | slight loss of firmness | becoming fully pasty | becoming fairly pasty |
| after 10 min. | firmness | | becoming fully pasty |
| after 12 min. | starting to become pasty | | |
| after 15 min. | becoming fully pasty | | |

## Claims

1. A process for preparing a stabilized oil or fat powder characterised by comprising adding an oil or fat to a mixture of gluten or glutenin and a solvent and agitating the mixture, removing the solvent, and subjecting the resultant residue to powdering.

2. A process for preparing a stabilized oil or fat powder as claimed in claim 1 characterised in that the solvent is a hydrous alcohol having an alcohol content of 20-80% by volume.

3. A process for preparing a stabilized oil or fat powder according to claim 1 or 2, characterised in that gluten is first agitated with a hydrous alcohol to dissolve gliadin in the gluten, the solid remaining is separated from the gliadin-containing solvent and the separated solid which contains glutenin is used as the glutenin in the process of claim 1 or 2.

## Patentansprüche

1. Verfahren zur Herstellung eines stabilisierten Öl- oder Fettpulvers, dadurch gekennzeichnet, daß es die Zugabe eines Öls oder Fettes zu einer Mischung aus Gluten oder Glutenin und einem Lösungsmittel und Bewegen der Mischung, Entfernen des Lösungsmittels und Pulverisieren des erhaltenen Rückstandes umfaßt.

2. Verfahren zur Herstellung eines stabilisierten Öl- oder Fettpulvers nach Anspruch 1, dadurch gekennzeichnet, daß das Lösungsmittel ein wäßriger Alkohol mit einem Alkoholgehalt von 20-80 Volumen-% ist.

**3.** Verfahren zur Herstellung eines stabilisierten Öl- oder Fettpulvers nach Anspruch 1 oder 2, dadurch gekennzeichnet, daß Gluten zuerst mit einem wäßrigen Alkohol bewegt wird, um Gliadin im Gluten zu lösen, der zurückbleibende Feststoff von dem gliadinhaltigen Lösungsmittel abgetrennt wird und der abgetrennte Feststoff, der Glutenin enthält, als das Glutenin im Verfahren nach Anspruch 1 oder 2 verwendet wird.

**Revendications**

**1.** Procédé pour la préparation d'une poudre d'huile ou de graisse stabilisée, caractérisé en ce qu'il comprend l'addition d'une huile ou graisse à un mélange de gluten ou de gluténine et d'un solvant, l'agitation du mélange, l'élimination du solvant et la réduction en poudre du résidu obtenu.

**2.** Procédé pour la préparation d'une poudre d'huile ou de graisse stabilisée selon la revendication 1, caractérisé en ce que le solvant est un alcool en solution aqueuse ayant une teneur en alcool de 20-80 % en volume.

**3.** Procédé pour la préparation d'une poudre d'huile ou de graisse stabilisée selon la revendication 1 ou 2, caractérisé en ce que l'on agite d'abord du gluten avec un alcool en solution aqueuse, pour dissoudre la gliadine dans le gluten, on sépare le solide restant du solvant contenant de la gliadine et on utilise le solide séparé, qui contient de la gluténine, en tant que la gluténine dans le procédé de la revendication 1 ou 2.

Fig. 1

Fig. 2